# EUROPÄISCHE PATENTSCHRIFT

(11) **EP 1 998 950 B1**
(45) Veröffentlichungstag und Bekanntmachung des Hinweises auf die Patenterteilung: **29.10.2014**
(21) Anmeldenummer: 07721945.9
(22) Anmeldetag: 22.02.2007
(51) Int. Cl.: B29C 49/78

(54) **VERFAHREN UND VORRICHTUNG ZUR BLASFORMUNG VON BEHÄLTERN UNTER VERWENDUNG VON WANDDICKENMESSUNG DES GEFORMTEN GEGENSTANDES**
PROCESS AND APPARATUS FOR THE BLOW MOULDING OF CONTAINERS USING WALL-THICKNESS MEASUREMENT ON THE MOULDED ARTICLE
PROCEDE ET DISPOSITIF DE FORMAge-SOUFFLAGE DE RECIPIENTS PAR RECOURS A LA MESURE DE L'EPAISSEUR DE PAROIS DE L'OBJET FACONNE

(30) Priorität: 29.03.2006 DE 102006014389
(43) Veröffentlichungstag der Anmeldung: 10.12.2008
(73) Patentinhaber: KHS Corpoplast GmbH, 22145 Hamburg (DE)
(72) Erfinder: LINKE, Michael, 22047 Hamburg (DE); LITZENBERG, Michael, 21502 Geesthacht (DE); BAUMGARTE, Rolf, 22926 Ahrensburg (DE); LEWIN, Frank, 22889 Tangstedt (DE)
(74) Vertreter: Hausfeld, Norbert
(86) Internationale Anmeldenummer: PCT/DE2007/000331
(87) Internationale Veröffentlichungsnummer: WO 2007/110018

(56) Entgegenhaltungen:
- WO-A-2005/000558
- AT-U1- 521
- DE-A1- 19 843 053

## Beschreibung

Die Erfindung betrifft ein Verfahren zur Blasformung von Behältern, bei dem ein Vorformling aus einem thermoplastischen Material nach einer thermischen Konditionierung entlang eines Transportweges im Bereich einer Heizstrecke innerhalb einer Blasform gereckt und durch Blasdruckeinwirkung in den Behälter umgeformt wird, sowie bei der die thermische Konditionierung von mehreren übereinander positionierten Heizstrahlern durchgeführt wird.

Die Erfindung betrifft darüber hinaus eine Vorrichtung zur Blasformung von Behältern aus einem thermoplastischen Material, die mindestens eine entlang eines Transportweges eines Vorformlings angeordnete Heizstrecke und eine mit einer Blasform versehene Blasstation aufweist, sowie bei der die Heizstrecke mindestens ein Heizelement mit mindestens zwei übereinander angeordneten Heizstrahlern aufweist und dass die Heizstrahler an eine Regelung angeschlossen sind, die mit mindestens einem Sensor zur Erfassung einer wanddicke des Behälters verbunden ist.

Bei einer Behälterformung durch Blasdruckeinwirkung werden Vorformlinge aus einem thermoplastischen Material, beispielsweise Vorformlinge aus PET (Polyethylene-rephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transpörträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Heizeinrichtung umlaufen. Bei einer stehenden Beheizung der Vorformlinge derart, daß die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Bei der Durchführung einer blastechnischen Behälterformung besteht eine wesentliche Aufgabe darin, in der Behälterwandung eine vorgegebene Materialverteilung zu erreichen. Ein wesentlicher Parameter zur Vorgabe der sich ergebenden Materialverteilung stellt die Verteilung der vor der Blasformung in den vorformlingen realisierten Wärmeverteilung dar.

Die Wärmeverteilung wird typischerweise derart realisiert, daß in einer Umfangsrichtung der Vorformlinge ein gleiches Temperaturniveau und in einer Längsrichtung der Vorformlinge ein Temperaturprofil erzeugt wird. Darüber hinaus erfolgt auch durch die Wand des Vorformlings hindurch von außen nach innen die Vorgabe eines geeigneten Temperaturprofils. Grundsätzlich ist davon auszugehen, daß Bereiche des Vorformlings mit einer geringeren Temperatur zu dickeren wandungsbereichen des geblasenen Behälters führen und daß die wärmeren Bereiche des Vorformlings bei der Durchführung der Blasverformung stärker verstreckt werden und hierdurch zu dünneren Wandungsbereichen des geblasenen Behälters führen.

Die Temperatur im Bereich der Vorformlinge kann mit sogenannten Pyrometern gemessen werden. Eine meßtechnische Erfassung einer konkreten wanddicke im Bereich der geblasenen Behälter kann mit sogenannten Wanddickensensoren erfolgen, die beispielsweise optisch oder unter Verwendung von Schallwellen arbeiten.

Eine konkrete Einstellung der für die Beheizung der Vorformlinge verwendeten Heizelemente sowie der einzelnen Heizstrahler erfolgt überwiegend manuell nach einer Auswertung der Wanddickenverteilung im Bereich der geblasenen Behälter. Aufgrund der Mehrzahl der in einer Transportrichtung der Vorformlinge hintereinander angeordneten Heizelemente sowie auftretender thermischer Ausgleichsvorgänge erfolgt die Einstellung adaptiv und manuell in einem umfangreichen Testbetrieb, in dem empirisch Einstellungen der Heizelemente verändert und die Auswirkungen auf die geblasenen Behälter erfaßt werden. Ein derartiges Vorgehen erweist sich in der Regel als sehr zeitaufwendig. Bei erheblichen Temperaturschwankungen der Umgebungstemperatur oder der Luftfeuchtigkeit sind darüber hinaus häufig Nacheinstellungen erforderlich.

Aus der WO 2005/000558 A gemäß den Oberbegriffen der Ansprüche 1 und 14 ist es bereits bekannt, eine Wanddicke im Bereich von geblasenen Behältern meßtechnisch zu erfassen und die betreffenden Meßwerte einer Steuerung zuzuführen, die die Beheizung der Vorformlinge beeinflußt.

In der AT 521 U1 wird eine Heizung für Vorformlinge beschrieben, bei der in lotrechter Richtung übereinander Heizstrahler angeordnet sind, die jeweils mit einem Temperaturregler verbunden sind. Die Temperatur im Bereich der Vorformlinge wird von einer Mehrzahl übereinander angeordneter Temperatursensoren erfaßt und einer Steuereinrichtung zugeführt.

Aufgabe der vorliegenden Erfindung ist es, ein Verfahren der einleitend genannten Art derart zu verbessern, daß mit geringem maschinenbaulichen Aufwand eine qualitativ hochwertige Beheizung bei gleichzeitig hohen Durchsatzraten unterstützt wird.

Diese Aufgabe wird erfindungsgemäß dadurch gelöst, daß im Anschluß an die Blasformung des Behälters auf mindestens einem Höhenniveau des Behälters eine Wanddicke gemessen wird, daß ein diesem Höhenniveau zugeordnete Heizstrahler hinsichtlich seiner Heizleistung geregelt wird und daß der Regelung als Sollwert ein Vorgabewert für die Wandstärke und als Istwert die gemessene Wanddicke zugeführt wird.

Weitere Aufgabe der vorliegenden Erfindung ist es, eine Vorrichtung der einleitend genannten Art derart zu konstruieren, daß hohe Durchsatzraten bei einfachem konstruktiven Aufbau und guter Produktqualität unterstützt werden.

Diese Aufgabe wird erfindungsgemäß dadurch gelöst, daß der Sensor auf einen Höhenniveau angeordnet ist, das einem Höhenniveau von einem der mindestens zwei Heizstrahler unter Einbeziehung eines Reckfaktors entspricht, der durch das Verhältnis der Länge des verstreckten Bereiches des Behälters zur Länge des zugehörigen Bereiches des Vorformlinges gebildet ist und dass ein diesem Höhenniveau zugeordneter Heizstrahler (41) hinsichtlich seiner Heizleistung durch die Regelungregelbar ist und dass der Regelung als Sollwert ein Vorgobewert für die Wandstärke und als Istwert die gemessene Wanddicke zu führbar ist.

Durch die Anordnung des Wanddickensensors auf einem Höhenniveau des Behälters, das direkt einem Höhenniveau eines korrespondierenden Heizstrahlers zugeordnet ist, ist es im Rahmen einer automatischen Regelung möglich, die Wärmeemission des Heizstrahlers derart einzustellen, daß exakt die vorgesehene Wanddicke des Behälters erreicht wird. Die Regelung ermöglicht einen weitgehenden automatischen Betrieb ohne die Notwendigkeit von manuellen Einstellungen der Heizparameter. Insbesondere werden automatisch Störungen ausgeregelt, die sich aus der Veränderung von Umgebungsparametern ergeben. Die Regelung wirkt darüber hinaus nicht auf Parameter ein, die lediglich indirekt die sich ergebenden Wanddicken beeinflussen, sondern es wird direkt der wesentliche Ausgangsparameter als Istwert für die Regelung berücksichtigt.

Eine hohe Konturtreue der geblasenen Behälter läßt sich dadurch erreichen, daß die Wanddickenmessung des Behälters auf mehreren unterschiedlichen Höhenniveaus durchgeführt wird.

Eine gezielte Beeinflussung der Wanddickenverhältnisse auf unterschiedlichen Höhenniveaus kann dadurch realisiert werden, daß mindestens zwei Paare von Meßeinrichtungen für die Wanddicke des Behälters und Wanddickenreglern, die jeweils auf einander entsprechenden Höhenniveaus angeordnet sind, in jeweils einen Regelkreis zur Durchführung einer niveauspezifischen Wanddickenregelung integriert werden.

Eine weitere Qualitätsverbesserung der geblasenen Behälter läßt sich dadurch erreichen, daß eine Temperaturmessung der Vorformlinge durchgeführt wird.

Zur Bereitstellung einer einfachen Regelungsstruktur wird vorgeschlagen, daß eine Temperaturregelung und eine Wanddickenregelung in einer Kaskadenregelung durchgeführt werden.

Eine direkte Regelung der Wanddickenverteilung wird dadurch unterstützt, daß die Temperaturregelung in einem inneren Regelkreis der Kaskadenregelung und die Wanddickenregelung in einem äußeren Regelkreis der Kaskadenregelung durchgeführt werden.

Eine thermische Beeinflussung der Vorformlinge durch alle verwendeten Heizelemente kann dadurch berücksichtigt werden, daß eine Temperaturmessung der Vorformlinge hinter der Heizstrecke durchgeführt wird.

Zur Berücksichtigung thermischer Ausgleichsvorgänge im Material der Vorformlinge wird vorgeschlagen, daß die Temperaturmessung der Vorformlinge in Transportrichtung der Vorformlinge zwischen der Heizstrecke und einem Blasrad durchgeführt wird.

Ein einfacher Vorrichtungsaufbau läßt sich dadurch erreichen, daß eine Wanddickenmessung in Transportrichtung hinter dem Blasrad durchgeführt wird.

Eine schnelle Durchführung von Regelungsvorgängen wird dadurch unterstützt, daß lediglich ein Teil der Heizelemente der Heizstrecke vom Wanddickenregler gesteuert werden.

Geringe Verzögerungszeiten bei einer Durchführung der Regelung werden dadurch erreicht, daß mindestens das in Transportrichtung der Vorformlinge letzte Heizelement vom Wanddickenregler gesteuert wird.

Ein vereinfachter Aufbau wird dadurch bereitgestellt, daß mindestens zwei Heizelemente parallel vom Wanddikkenregler angesteuert werden.

Ebenfalls trägt es zu einem vereinfachten Grundaufbau bei, daß mindestens das in Transportrichtung der Vorformlinge erste Heizelement ungeregelt eine Grundtemperatur der Vorformlinge erzeugt.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: einen Querschnitt durch ein Heizelement mit einer Mehrzahl übereinander angeordneter Heizstrahler sowie einen zugeordneten Vorformling,
- Fig. 6: einen Querschnitt durch eine Sensoranordnung zur Messung von Wanddicken eines geblasenen Behälters,
- Fig. 7: eine Prinzipdarstellung einer Blasmaschine mit Heizstrecke, Blasrad, Pyrometer und Wanddikkensensor und
- Fig. 8: eine schematische Darstellung eines Regelungskonzepts zur Regelung der Temperatur der Vorformlinge sowie zur Regelung der Wanddicke der geblasenen Behälter.

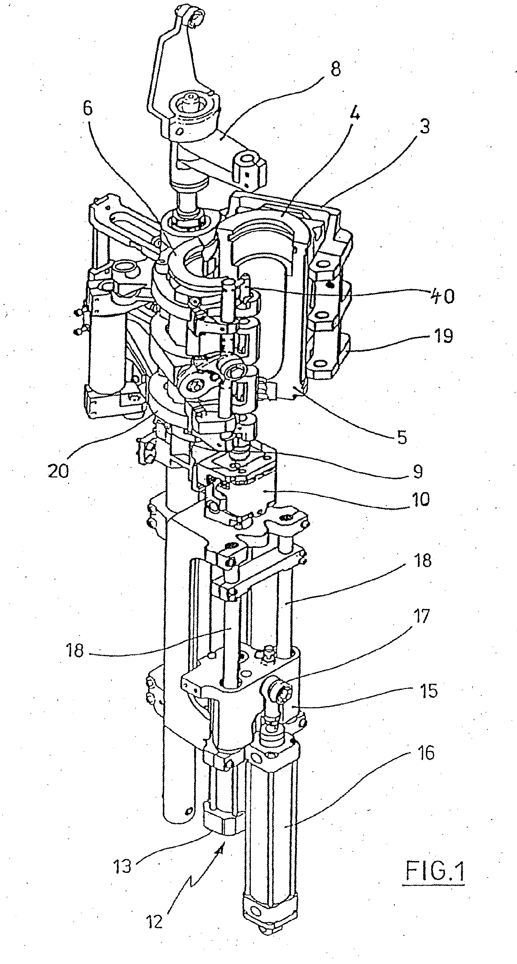

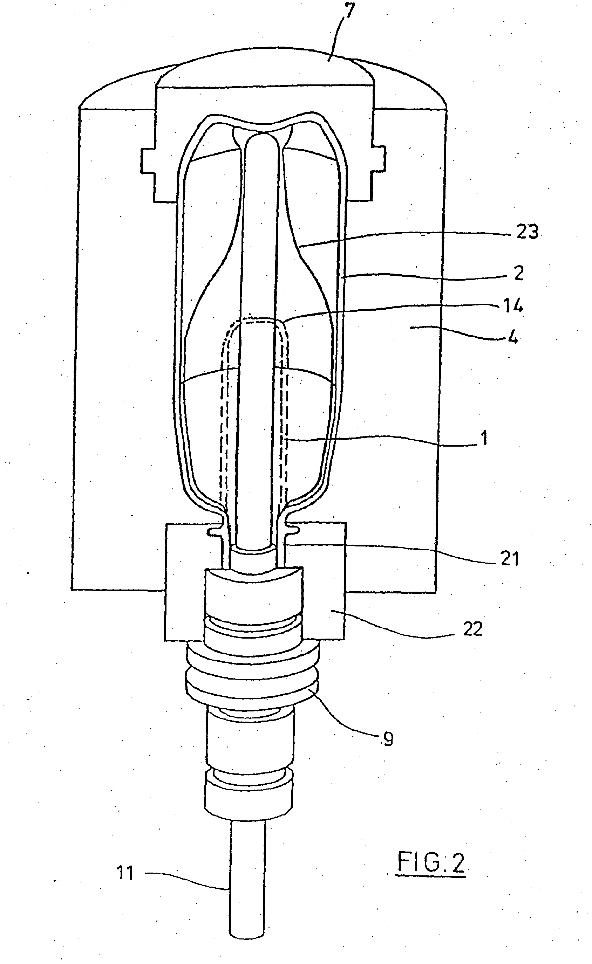

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorgänges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

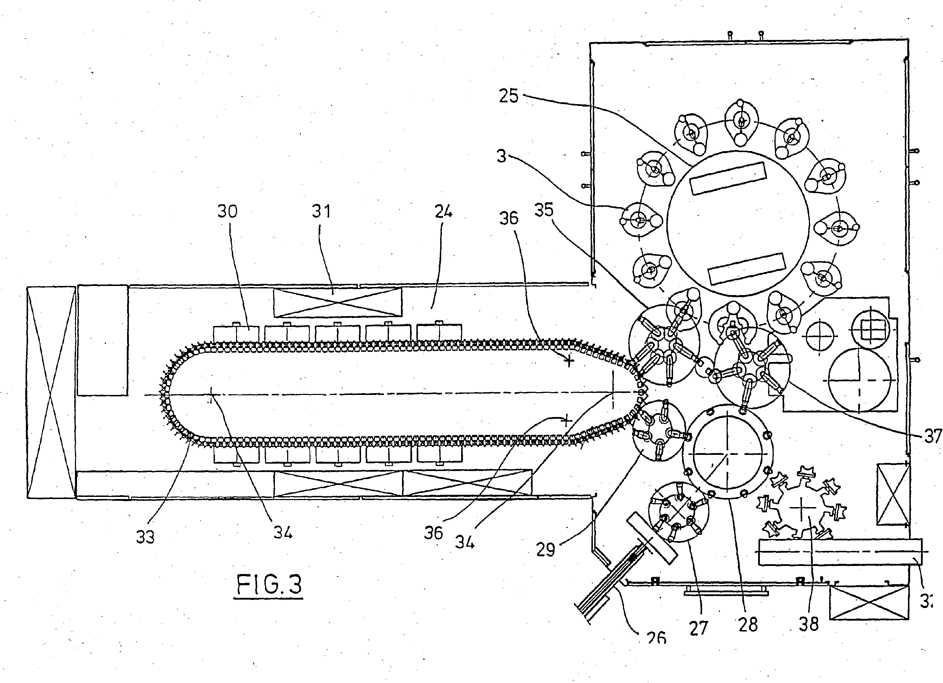

Fig. 3 zeigt den grundsätzlichen Aufbau einer Blasmaschine, die mit einer Heizstrecke (24) sowie einem rotierenden Blasrad (25) versehen ist. Ausgehend von einer vorformlingseingabe (26) werden die Vorformlinge (1) von Übergaberädern (27, 28, 29) in den Bereich der Heizstrecke (24) transportiert. Entlang der Heizstrecke (24) sind Heizelement (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt, und über das Übergaberad (28) und ein Aüsgaberad (38) zur Ausgabestrecke (32) transportiert.

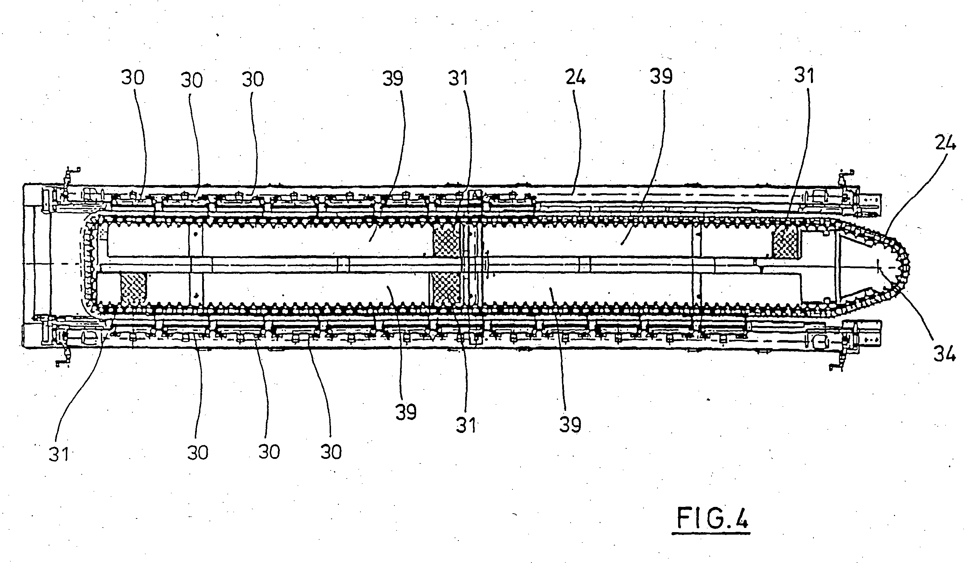

In der in Fig. 4 dargestellten modifizierten Heizstrekke (24) können durch die größere Anzahl von Heizelementen (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizelementen (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizelementen (30) gegenüberliegenden Oberflächen Reflektoren für die Heizstrahlung bereitstellen, ebenfalls ist es möglich, über die abgegebene Kühlluft auch eine Kühlung der Heizelemente (30) zu realisieren.

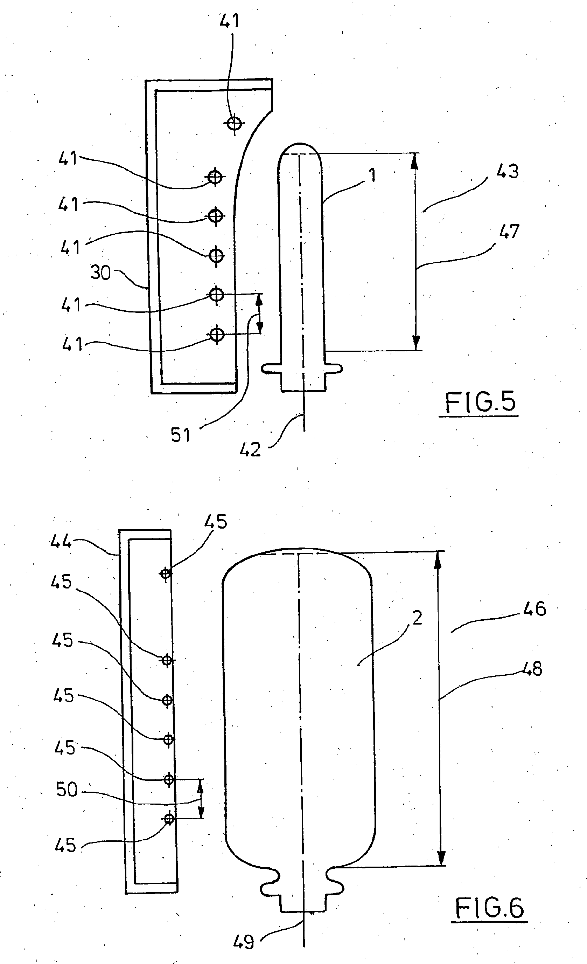

Fig. 5 zeigt eine schematische Darstellung eines Heizelementes (30), das mit einer Mehrzahl übereinander angeordneter Heizstrahler (41) versehen ist. Unter Verwendung der Heizstrahler (41) ist es möglich, in Richtung einer Längsachse (42) des Vorformlings (1) ein vorgegebenes Temperaturprofil zu erzeugen. Bei der Durchführung eines Reckvorganges wird im wesentlichen ein Streckbereich (43) des Vorformlings (1) einer biaxialen Orientierung unterworfen.

Fig. 6 zeigt eine schematische Darstellung einer Meßeinrichtung (44) mit einer Mehrzahl übereinander angeordneter Sensoren (45) zur Erfassung einer Wanddicke des Behälters (2). Der Streckbereich (43) des Vorformlings (1) wurde als Folge des Reck- und Blasvorganges in einen Orientierungsbereich (46) des Behälters (2) umgeformt. Der Streckbereich (43) des Vorformlinges (1) weist eine Ausgangslänge (47) auf und der Orientierungsbereich (46) des Behälters (2) ist mit einer Produktlänge (48) versehen. Der Quotient aus der Produktlänge (48) und der Ausgangslänge (47) ergibt den realisierten Reckfaktor.

Der Behälter (2) weist eine Behälterlängsachse (49) auf, in deren Richtung hintereinander die Sensoren (45) angeordnet sind. Ein Sensorabstand (50) ergibt sich aus einem Heizstrahlerabstand (51) multipliziert mit dem Reckfaktor.

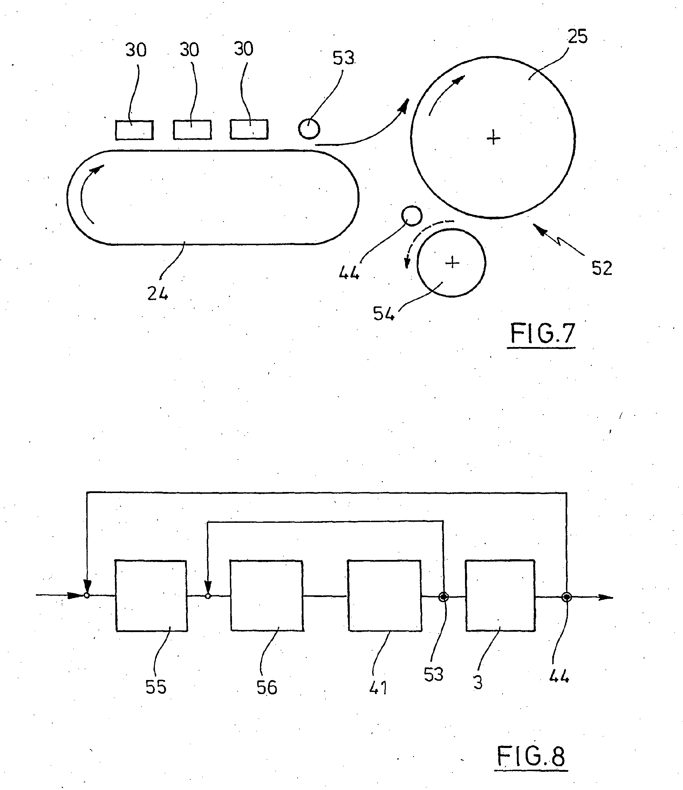

Fig. 7 zeigt eine schematische Darstellung einer Blasmaschine (52) in einer gegenüber der Darstellung in Fig. 3 stark vereinfachten und schematisierten Struktur. Es ist zu erkennen, daß ein Temperatursensor (53) zur Erfassung einer Temperatur der Vorformlinge (1) in einer Transportrichtung der Vorformlinge (1) im Bereich der Heizstrecke (24) hinter den Heizelementen (30) angeordnet ist. Vorteilhafterweise ist der Temperatursensor (53) möglichst dicht am Blasrad (25) angeordnet, um eine Temperaturerfassung nach einer Durchführung von thermischen Ausgleichsvorgängen innerhalb der Wandung der Vorformlinge (1) zu ermöglichen. Als Temperatursensor (53) kann beispielsweise ein Pyrometer verwendet werden. Insbesondere ist es möglich, mehrere Temperatursensoren (53) in Richtung der Längsachse (42) der Vorformlinge (1) übereinander anzuordnen, um ein Temperaturprofil der Vorformlinge (1) zu erfassen. Als besonders vorteilhaft erweist es sich, eine Mehrzahl von Temperatursensoren (53) jeweils auf einem Höhenniveau der Heizstrahler (41) zu positionieren, um eine direkte Regelung der einzelnen Heizstrahler (41) durchführen zu können.

Dargestellt ist in Fig. 7 ebenfalls die Anordnung der Meßeinrichtung (44) zur Wanddickenerfassung der Behälter (2). Die Meßeinrichtung (44) kann beispielsweise im Bereich einer Entnahmeeinrichtung (54) angeordnet werden, die die geblasenen Behälter (2) aus dem Bereich des Blasrades (25) wegführt.

Fig. 8 zeigt eine schematische Darstellung eines Regelungssystems für die Heizelemente (30) bzw. die Heizstrahler (41). Das Regelungssystem ist in Form einer Kaskadenregelung ausgebildet. Ein äußerer Regelkreis erfaßt hinter der Blasstation (3) über die Meßeinrichtung (44) die Wanddicke (2) des Behälters (2) auf einem vorgegebenen Höhenniveau und führt diesen Istwert dem Eingang eines Wanddickenreglers (55) zu. Unmittelbarer Eingangswert für den Wanddickenregler (55) ist die Regeldifferenz zwischen einer vorgegebenen Wanddicke sowie der meßtechnisch erfaßten Wanddicke. Ein Ausgangswert des Wanddickenreglers (55) stellt den Sollwert für einen inneren Temperaturregelkreis bereit.

Einem Temperaturregler (56) wird als unmittelbarer Steuerwert die Differenz zwischen dem Ausgangswert des Wanddickenreglers (55) und einem vom Temperatursensor (53) erfaßten Temperaturwert des Vorformlings (1) auf einem vorgegebenen Höhenniveau zugeführt. Typischerweise wird jedem der Heizstrahler (41) eine in Fig. 8 dargestellte Regelungsstruktur zugeordnet.

Gemäß einer vereinfachten Regelung wird der innere Regelkreis weggelassen und es erfolgt ausschließlich eine Regelung im Hinblick auf die Wanddicke ohne meßtechnische Erfassung und Regelung der Temperatur. Vorteilhafterweise ist mindestens einer der Regler (55, 56) mit einem Integralverhalten ausgebildet, um Regeldifferenzen zu vermeiden. Gemäß einer weiteren Regelungsvariante berücksichtigt die Regelung ein Totzeitverhalten des Regelungssystems aufgrund der Transportweglängen der Vorformlinge (1) bzw. oder Behälter (2). Es wird hierbei berücksichtigt, daß eine in Abhängigkeit von der Transportgeschwindigkeit bekannte Verzögerung zwischen einer Stellgrößenveränderung und einer Veränderung der Ausgangsgröße vorliegt.

## Patentansprüche

1. Verfahren zur Blasformung von Behältern (2), bei dem ein Vorformling (1) aus einem thermoplastischem Material nach einer thermischen Konditionierung entlang eines Transportweges im Bereich einer Heizstrecke (24) innerhalb einer Blasform (4) gereckt und durch Blasdruckeinwirkung in den Behälter (2) umgeformt wird, sowie bei der die thermische Konditionierung von mehreren übereinander positionierten Heizstrahlern (41) durchgeführt wird, **dadurch gekennzeichnet, daß** im Anschluß an die Blasformung des Behälters (2) auf mindestens einem Höhenniveau des Behälters (2) eine Wanddicke gemessen wird und daß ein diesem Höhenniveau zugeordneter Heizstrahler (41) hinsichtlich seiner Heizleistung geregelt wird und daß der Regelung als Sollwert ein Vorgabewert für die Wandstärke und als Istwert die gemessene Wanddicke zugeführt wird.

2. Verfahren nach Anspruch 1, **dadurch gekennzeichnet, daß** die Wanddickenmessung des Behälters (2) auf mehreren unterschiedlichen Höhenniveaus durchgeführt wird.

3. Verfahren nach Anspruch 1 oder 2, **dadurch gekennzeichnet, daß** mindestens zwei Paare von Meßeinrichtungen (44) für die Wanddicke des Behälters (2) und Wanddickenreglern (55), die jeweils auf einander entsprechenden Höhenniveaus angeordnet sind, in jeweils einen Regelkreis zur Durchführung einer niveauspezifischen wanddickenreglung integriert werden.

4. Verfahren nach einem der Ansprüche 1 bis 3, **dadurch gekennzeichnet, daß** eine Temperaturmessung der Vorformlinge (1) durchgeführt wird.

5. Verfahren nach einem der Ansprüche 1 bis 4, **dadurch gekennzeichnet, daß** eine Temperaturregelung und eine Wanddickenregelung in einer Kaskadenregelung durchgeführt werden.

6. Verfahren nach Anspruch 5, **dadurch gekennzeichnet, daß** die Temperaturregelung in einem inneren Regelkreis der Kaskadenregelung und die Wanddickenregelung in einem äußeren Regelkreis der Kaskadenregelung durchgeführt werden.

7. Verfahren nach einem der Ansprüche 1 bis 6, **dadurch gekennzeichnet, daß** eine Temperaturmessung der Vorformlinge hinter der Heizstrecke (24) durchgeführt wird.

8. Verfahren nach einem der Ansprüche 1 bis 7, **dadurch gekennzeichnet, daß** die Temperaturmessung der Vorformlinge (1) in Transportrichtung der Vorformlinge (1) zwischen der Heizstrecke (24) und einem Blasrad (25) durchgeführt wird.

9. Verfahren nach einem der Ansprüche 1 bis 8, **dadurch gekennzeichnet, daß** eine Wanddickenmessung in Transportrichtung hinter dem Blasrad (25) durchgeführt wird.

10. Verfahren nach einem der Ansprüche 1 bis 9, **dadurch gekennzeichnet, daß** lediglich ein Teil der Heizelemente (30) der Heizstrecke (24) vom Wanddickenregler (55) gesteuert werden.

11. Verfahren nach Anspruch 10, **dadurch gekennzeichnet, daß** mindestens das in Transportrichtung der Vorformlinge (1) letzte Heizelement (30) vom Wanddickenregler (55) gesteuert wird.

12. Verfahren nach einem der Ansprüche 1 bis 11, **dadurch gekennzeichnet, daß** mindestens zwei Heizelemente (30) parallel vom wanddickenregler (55) angesteuert werden.

13. Verfahren nach einem der Ansprüche 1 bis 12, **dadurch gekennzeichnet, daß** mindestens das in Transportrichtung der Vorformlinge (1) erste Heizelement (30) ungeregelt eine Grundtemperatur der Vorformlinge (1) erzeugt.

14. Vorrichtung zur Blasformung von Behältern (2) aus einem thermoplastischen Material, die mindestens eine entlang eines Transportweges eines Vorformlings (1) angeordnete Heizstrecke (24) und eine mit einer Blasform (4) versehene Blasstation aufweist, sowie bei der die Heizstrecke (24) mindestens ein Heizelement mit mindestens zwei übereinander angeordneten Heizstrahlern (41) aufweist und, daß die Heizstrahler (41) an eine Regelung angeschlossen sind, die mit mindestens einem Sensor (45) zur Erfassung einer Wanddicke des Behälters (2) verbunden ist **dadurch gekennzeichnet daß** der Sensor (42) auf einem Höhenniveau angeordnet ist, das einem Höhenniveau von einem der mindestens zwei Heizstrahler (41) unter Einbeziehung eines Reckfaktors entspricht, der durch das Verhältnis der Länge des verstreckten Bereiches des Behälters (2) zur Länge des zugehörigen Bereiches des Vorformlings (1) gebildet ist und dass ein diesem Höhenniveau zugeordneten Heizstrahler (41) hinsichtlich seiner Heizleistung durch die Regelungregelbar ist und dass der Regelung als Sollwert ein Vorgobewert für die Wandstärke und als Istwert die gemessene Wanddicke zu führbar ist.

15. Vorrichtung nach Anspruch 14, **dadurch gekennzeichnet, daß** mehrere Sensoren (45) auf relativ zueinander unterschiedlichen Höhenniveaus angeordnet sind.

16. Vorrichtung nach Anspruch 14 oder 15, **dadurch gekennzeichnet, daß** jeweils unterschiedlichen Höhenniveaus zugeordnete Paare von Sensoren (45) und Heizstrahlern (41) in einem dem jeweiligen Höhenniveau zugeordneten Regelkreis angeordnet sind.

17. Vorrichtung nach einem der Ansprüche 14 bis 16, **dadurch gekennzeichnet, daß** die Regelung mindestens einen Temperatursensor (53) aufweist.

18. Vorrichtung nach einem der Ansprüche 14 bis 17, **dadurch gekennzeichnet, daß** mindestens ein Temperatursensor (53) und mindestens ein Sensor (45) zur Wanddickenmessung gemeinsam mit einem Wanddikkenregler (55) und einem Temperaturregler (56) in einer Kaskadenregelung angeordnet sind.

19. Vorrichtung nach Anspruch 18, **dadurch gekennzeichnet, daß** der Temperatursensor (53) und der Temperaturregler (56) in einem inneren Regelkreis der Kaskadenregelung angeordnet sind und der Sensor (45) zur Wanddickenregelung und der Wanddikkenregler (55) Teile eines äußeren Regelkreises der Kaskadenregelung bilden.

## Claims

1. A method for blow moulding containers (2), wherein a preform (1) made of a thermoplastic material is stretch-formed within a blow mould (4) after a thermal conditioning along a transport path in the area of a heating section (24) and is shaped to form the container (2) under the impact of blow moulding pressure, and wherein the thermal conditioning is carried out by a plurality of radiant heaters (41), which are positioned on top of one another, **characterised in that**, following the blow moulding of the container (2), a wall thickness is measured at at least one height level of the container (2) and that a radiant heater (41), which is assigned to this height level, is regulated with regard to its heat output and that a preset value is supplied as setpoint value for the wall thickness and the measured wall thickness is supplied as actual value.

2. The method according to claim 1, **characterised in that** the wall thickness measuring of the container (2) is carried out at a plurality of different height levels.

3. The method according to claim 1 or 2, **characterised in that** at least two pairs of measuring devices (44) for the wall thickness of the container (2) and wall thickness regulators (55), which are in each case arranged at corresponding height levels, are in each case integrated into a closed loop for carrying out a level-specific wall thickness regulation.

4. The method according to any one of claims 1 to 3, **characterised in that** a temperature measuring of the preforms (1) is carried out.

5. The method according to any one of claims 1 to 4, **characterised in that** a temperature regulation and a wall thickness regulation are carried out in a cascade regulation.

6. The method according to claim 5, **characterised in that** the temperature regulation is carried out in an inner closed loop of the cascade regulation and the wall thickness regulation is carried out in an outer closed loop of the cascade regulation.

7. The method according to any one of claims 1 to 6, **characterised in that** a temperature measuring of the preforms is carried out downstream from the heating section (24).

8. The method according to any one of claims 1 to 7, **characterised in that** the temperature measuring of the preforms (1) is carried out in transport direction of the preforms (1) between the heating section (24) and a blowing wheel (25).

9. The method according to any one of claims 1 to 8, **characterised in that** a wall thickness measuring is carried out in transport direction downstream from the blowing wheel (25).

10. The method according to any one of claims 1 to 9, **characterised in that** only a part of the heating elements (30) of the heating section (24) is controlled by the wall thickness regulator (55).

11. The method according to claim 10, **characterised in that** at least the heating element (30), which is last in transport direction of the preforms (1), is controlled by the wall thickness regulator (55).

12. The method according to any one of claims 1 to 11, **characterised in that** at least two heating elements (30) are actuated in parallel by the wall thickness regulator (55).

13. The method according to any one of claims 1 to 12, **characterised in that** at least the heating element (30), which is first in transport direction of the preforms (1), creates a basic temperature of the preforms (1) in an unregulated manner.

14. A device for blow moulding containers (2) of a thermoplastic material, which encompasses at least one heating section (24), which is arranged along a transport path of a preform (1), and a blowing station, which is provided with a blow mould (4), and wherein the heating section (24) encompasses at least one heating element comprising at least two radiant heaters (41), which are arranged on top of one another, and that the radiant heaters (41) are connected to a regulation, which is connected to at least one sensor (45) for detecting a wall thickness of the container (2), **characterised in that** the sensor (42) is arranged at a height level, which corresponds to a height level of one of the at least two radiant heaters (41) by including a stretching factor, which is formed by the ratio of the length of the stretched area of the container (2) to the length of the corresponding area of the preform (1), and that a radiant heater (41), which is assigned to this height level, can be regulated by means of the regulation with regard to its heat output and that a preset value can be supplied as setpoint value for the wall thickness and the measured wall thickness can be is supplied as actual value to the regulation.

15. The device according to claim 14, **characterised in that** a plurality of sensors (45) are arranged at height levels, which are different relative to one another.

16. The device according to claim 14 or 15, **characterised in that** different height levels of assigned pairs of sensors (45) and radiant heaters (41) are in each case arranged in a closed loop, which is assigned to the respective height level.

17. The device according to any one of claims 14 to 16, **characterised in that** the regulation encompasses at least one temperature sensor (53).

18. The device according to any one of claims 14 to 17, **characterised in that**, together with a wall thickness regulator (55) and a temperature regulator (56), at least one temperature sensor (53) and at least one sensor (45) for measuring the wall thickness are arranged in a cascade regulation.

19. The device according to claim 18, **characterised in that** the temperature sensor (53) and the temperature regulator (56) are arranged in an inner closed loop of the cascade regulation and the sensor (45) for wall thickness regulation and the wall thickness regulator (55) form parts of an outer closed loop of the cascade regulation.

## Revendications

1. Procédé de moulage par soufflage de récipients (2), dans le cadre duquel une préforme (1) en un matériau thermoplastique, après un conditionnement thermique le long d'un parcours dans une zone de chauffage (24), est étirée à l'intérieur d'un moule de soufflage (4) et, sous l'action d'une pression de soufflage, transformée en un récipient (2), le conditionnement thermique étant réalisé par plusieurs radiateurs de chauffage (41) positionnés l'un au dessus de l'autre, **caractérisé en ce que,** à l'issue du moulage par soufflage du récipient (2), une épaisseur de paroi est mesurée à au moins un niveau de hauteur du récipient (2) et qu'un radiateur de chauffage (41) affecté à ce niveau de hauteur est réglé quant à sa puissance de chauffage et que cette régulation fait appel à une épaisseur de paroi prescrite comme valeur de consigne et à l'épaisseur de paroi mesurée comme valeur effective.

2. Procédé selon la revendication 1, **caractérisé en ce que** la mesure de l'épaisseur de paroi du récipient (2) est réalisée à plusieurs niveaux de hauteur différents.

3. Procédé selon la revendication 1 ou 2, **caractérisé en ce qu**'au moins deux paires de systèmes de mesure (44) et de régulateurs (55) de l'épaisseur de paroi du récipient (2) respectivement agencés à des niveaux de hauteur correspondants sont respectivement intégrées dans une boucle d'asservissement d'un système de régulation d'épaisseur de paroi spécifique à un niveau de hauteur.

4. Procédé selon l'une des revendications 1 à 3, **caractérisé en ce qu'**une mesure de la température des préformes (1) est effectuée.

5. Procédé selon l'une des revendications 1 à 4, **caractérisé en ce qu**'une régulation de température et une régulation d'épaisseur de paroi sont effectuées sous forme de régulation en cascade.

6. Procédé selon la revendication 5, **caractérisé en ce que** la régulation de température est effectuée dans une boucle d'asservissement intérieure de la régulation en cascade et la régulation d'épaisseur de paroi dans une boucle d'asservissement extérieure de la régulation en cascade.

7. Procédé selon l'une des revendications 1 à 6, **caractérisé en ce qu**'une mesure de la température des préformes est effectuée derrière la zone de chauffage (24).

8. Procédé selon l'une des revendications 1 à 7, **caractérisé en ce que** la mesure de la température des préformes (1) est effectuée, dans le sens de transport des préformes (1), entre la zone de chauffage (24) et une roue de soufflage (25).

9. Procédé selon l'une des revendications 1 à 8, **caractérisé en ce qu**'une mesure de l'épaisseur de paroi est effectuée, dans le sens de transport, derrière la roue de soufflage (25).

10. Procédé selon l'une des revendications 1 à 9, **caractérisé en ce qu**'une partie seulement des éléments de chauffage (30) de la zone de chauffage (24) est commandée par le régulateur d'épaisseur de paroi (55).

11. Procédé selon la revendication 10, **caractérisé en ce qu**'au moins le dernier élément de chauffage (30), vu dans le sens de transport des préformes (1), est commandé par le régulateur d'épaisseur de paroi (55).

12. Procédé selon l'une des revendications 1 à 11, **caractérisé en ce qu**'au moins deux éléments de chauffage (30) sont commandés parallèlement par le régulateur d'épaisseur de paroi (55).

13. Procédé selon l'une des revendications 1 à 12, **caractérisé en ce qu**'au moins le premier élément de chauffage (30), vu dans le sens de transport des préformes (1), chauffe la préformes (1) à une température de base non réglée.

14. Dispositif de moulage par soufflage de récipients (2) en un matériau thermoplastique présentant au moins une zone de chauffage (24) agencée le long d'un parcours d'une préforme (1) et une station de soufflage (3) équipée d'un moule de soufflage (4) et dont la zone de chauffage (24) présente au moins un élément de chauffage avec au moins deux radiateurs de chauffage (41) placés l'un au-dessus de l'autre, ces radiateurs de chauffage (41) étant branchés sur une commande connectée à au moins un capteur (45) destiné à saisir l'épaisseur de paroi du récipient (2), **caractérisé en ce que** le capteur (42) est placé à un niveau de hauteur correspondant à un niveau de hauteur de l'un des au moins deux radiateurs de chauffage (41), cette correspondance tenant compte d'un facteur d'étirage basé sur le rapport entre la longueur de la zone étirée du récipient (2) et la longueur de la zone correspondante de la préforme (1), et **en ce que** la puissance de chauffage d'un radiateur de chauffage (41) affecté à ce niveau de hauteur est réglable par la commande et que cette régulation fait appel à une épaisseur de paroi prescrite comme valeur de consigne et à l'épaisseur de paroi commune comme valeur effective.

15. Dispositif selon la revendication 14, **caractérisé en ce que** plusieurs capteurs (45) sont agencés à des niveaux de hauteur différents les uns par rapport aux autres.

16. Dispositif selon la revendication 14 ou 15, **caractérisé en ce que** des paires de capteurs (45) et de radiateurs de chauffage (41) affectées à différents niveaux de hauteur sont respectivement agencées dans une boucle d'asservissement affectée à chacun de ces niveaux de hauteur.

17. Dispositif selon l'une des revendications 14 à 16, **caractérisé en ce que** la commande présente au moins un capteur de température (53).

18. Dispositif selon l'une des revendications 14 à 17, **caractérisé en ce qu**'au moins un capteur de température (53) et au moins un capteur (45) de mesure de l'épaisseur de paroi sont agencés avec un régulateur d'épaisseur de paroi (55) et un régulateur de température (56) pour former ensemble une régulation en cascade.

19. Dispositif selon la revendication 18, **caractérisé en ce que** le capteur de température (53) et le régulateur de température (56) sont agencés dans une boucle d'asservissement intérieure de la régulation en cascade et que le capteur (45) de régulation d'épaisseur de paroi et le régulateur d'épaisseur de paroi (55) forment des partie d'une boucle d'asservissement extérieure de la régulation en cascade.
